# EUROPÄISCHE PATENTSCHRIFT

(11) **EP 3 078 641 B1**
(45) Veröffentlichungstag und Bekanntmachung des Hinweises auf die Patenterteilung: **23.10.2019**
(21) Anmeldenummer: 16161894.7
(22) Anmeldetag: 23.03.2016
(51) Int. Cl.: C02F 9/00, C02F 1/00, C02F 1/52, C02F 1/68, C02F 1/66

(54) **PHOSPHORRÜCKGEWINNUNGSANLAGE UND VERFAHREN ZUM BETREIBEN EINER PHOSPHORRÜCKGEWINNUNGSANLAGE**
PHOSPHOR OBTAINING INSTALLATION AND METHOD FOR OPERATING SAME
INSTALLATION DE RECUPERATION DE PHOSPHORE ET SON PROCEDE DE FONCTIONNEMENT

(30) Priorität: 08.04.2015 DE 102015105315
(43) Veröffentlichungstag der Anmeldung: 12.10.2016
(73) Patentinhaber: EnBW Energie Baden-Württemberg AG, 76131 Karlsruhe (DE)
(72) Erfinder: TUREK, Rudolf, 76185 Karlsruhe (DE); WALZ, Leonhard, 76437 Rastatt (DE)
(74) Vertreter: Kaufmann, Ursula Josefine

(56) Entgegenhaltungen:
- EP-A1- 0 190 975
- WO-A1-2013/009231
- WO-A1-2014/145282
- CA-A1- 2 462 346
- David Markus Montag: "Phosphorrückgewinnung bei der Abwasserreinigung : Entwicklung eines Verfahrens zur Integration in kommunale Kläranlagen", , 22 February 2008 (2008-02-22), XP055461446, Retrieved from the Internet: URL:http://darwin.bth.rwth-aachen.de/opus3 /volltexte/2008/2298/pdf/Montag_David.pdf [retrieved on 2018-03-21]

## Beschreibung

### Stand der Technik

Die Erfindung betrifft eine Phosphorrückgewinnungsanlage und ein Verfahren zum Betreiben einer Phosphorrückgewinnungsanlage.

Phosphor ist für das Pflanzenwachstum von großer Bedeutung. Mehr als 90% der Rohphosphate weltweit werden zu Dünger verarbeitet, wobei dieser Phosphor aus geogenen Lagerstätten stammt, deren Reserven sich in absehbarer Zeit erschöpfen können. Häufig sind derartige Rohphosphate mit Schadstoffen belastet, die mit zunehmender Abbautiefe im Gehalt zunehmen.

Zunehmend gewinnt die Phosphorrückgewinnung als Phosphorquelle an Bedeutung. Hierzu sind unterschiedliche Verfahren Gegenstand von wissenschaftlichen Untersuchungen an Pilotanlagen. Eine gezielte Phosphorelimination beispielsweise im Abwasser erfolgt entweder über eine chemisch-physikalische oder über eine biologische Phosphorelimination. Beim bekannten "Stuttgarter Verfahren" wird aus anaerob stabilisiertem Klärschlamm Phosphor in Form von Magnesium-Ammonium-Phosphat (MAP) gewonnen.

Ein anderes Verfahren wird in der DE 10 2011 016 826 A1 beschrieben. Dort erfolgt die Rückgewinnung von Phosphor aus Abwasser mit Hilfe eines Calcium-Silicat-Hydrat als Kristallisationssubstrat im kontinuierlichen Betrieb in einer Phosphorrückgewinnungsanlage. Diese umfasst einen im Wesentlichen zylindrischen Rührreaktor sowie einen Sedimentationsbehälter, wobei der Rührreaktor in eine im oberen Teil befindliche Ruhezone und eine im unteren Teil befindliche Reaktionszone unterteilt ist. Der Rührreaktor umfasst eine Rührvorrichtung und einen Zulauf, die beide mittig in der Reaktionszone angeordnet sind. Der Rührreaktor ist dem Sedimentationsbehälter derart vorgeschaltet, dass der Ablauf aus der Ruhezone des Rührreaktors als Zulauf in die mittlere Höhe des Sedimentationsbehälters verbunden ist.

Die CA 2462346 A1 offenbart ein Verfahren und eine Vorrichtung mit einer mehrstufigen mobilen Einheit zur Behandlung von Gülle aus landwirtschaftlichen Betrieben. Überschüssiger Phosphorgehalt wird aus der Flüssigfraktion der Gülle mittels kalksteinhaltigen Steinbruchfeinmaterial extrahiert, so dass in der verbliebenen Flüssigfraktion ein zur Düngung geeigneter, ausgewogener Gehalt von Stickstoff und Phosphor eingestellt werden kann. Zunächst wird kalksteinhaltiges Steinbruchfeinmaterial zur Flüssigfraktion gegeben, dann wird die Mischung gerührt, um eine Reaktion zwischen dem enthaltenen Phosphor und dem kalksteinhaltigen Steinbruchfeinmaterial zu ermöglichen und anschließend der dabei gebildete phosphorreiche Feststoffgehalt in Form von ausgefällten Phosphorverbindungen und kalksteinhaltigem Steinbruchfeinmaterial mittels einer Extruderschnecke von nun der verwendungsbereiten Flüssigfraktion getrennt.

Die WO 2014/145282 A1 offenbart eine mobile Einheit, welche einen Sammelbehälter aufweist, in dem Abwasser zur Desinfektion angesäuert wird und stromab mit weiteren Zusätzen zur Desinfektion versetzt und gemischt wird. Die Mischung wird einem Reaktionsbehälter zugeführt, in dem sich Feststoffe als Abfallprodukt absetzen, während das Wasser weiter desinfiziert, gefiltert und gesammelt wird. Die Feststoffe aus dem Reaktionsbehälter werden in einem Mischer in Suspension gehalten und zum Entwässern einer Filterpresse zugeführt. Das Wasser wird dem Prozess stromauf des Sammelbehälters wieder zugeführt, während die undefinierten Feststoffe für verschiedene Einsatzzwecke eingesetzt werden können.

Verschiedene Verfahren zur Phosphorrückgewinnung sind in der Dissertation von David Markus Montag "Phosphorrückgewinnung bei der Abwasserreinigung: Entwicklung eines Verfahrens zur Integration in kommunalen Kläranlagen", 22. Februar 2008 (2008-02-22), http://darwin.bth.rwth-aachen.de/opus3/volltexte/2008/2298/pdf/Montag_David.pdf, beschrieben.

### Offenbarung der Erfindung

Aufgabe der Erfindung ist es, eine effiziente und kommerziell einsetzbare Phosphorrückgewinnungsanlage zu schaffen.

Eine weitere Aufgabe ist die Schaffung eines Verfahrens zum Betreiben einer Phosphorrückgewinnungsanlage.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Die Erfindung geht aus von einer Phosphorrückgewinnungsanlage gemäß Anspruch 1 zur Rückgewinnung von Phosphor aus einem phosphorhaltigen Medium, insbesondere aus Klärschlamm und/oder Abwasser mit einer stationären Anlage, welche das phosphorhaltige Medium bereitstellt, und wenigstens einer mobilen Prozesseinheit zur chemischen Behandlung des phosphorhaltigen Mediums, welche an die stationäre Anlage gekoppelt ist, wobei die mobile Prozesseinheit in einem transportablen Gehäuse einen Rücklösebehälter, einen Sammelbehälter sowie einen Fällungsbehälter umfasst.

Es wird vorgeschlagen, dass die mobile Prozesseinheit entlang einer Prozessrichtung des Mediums auf den Rücklösebehälter ein mit diesem verbundener Sammelbehälter, auf den Sammelbehälter eine mit diesem verbundene Filtrationseinheit, auf die Filtrationseinheit ein mit dieser verbundenen Fällungsbehälter und auf den Fällungsbehälter eine mit diesem verbundene Trennvorrichtung folgt, wobei (i) der Rücklösebehälter zum Rücklösen von Phosphat im zugeführten phosphorhaltigen Medium, der mit einer Dosiereinrichtung für Säure gekoppelt ist, (ii) der Sammelbehälter vorgesehen ist zum Sammeln des in einer an die Prozesseinheit angekoppelten mobilen Presseneinheit teilweise gereinigten Mediums, (iii) die Filtrationseinheit zur Bildung von Retentat und Permeat aus dem teilweise gereinigten Medium vorgesehen ist, wobei die Filtrationseinheit mit ihrer Retentatseite mit dem Sammelbehälter zur Rückleitung des Retentats aus der Filtrationseinheit in den Sammelbehälter verbunden ist, (iv) der Fällungsbehälter zum Ausfällen eines phosphatreichen Produkts, aus dem Permeat vorgesehen ist und mit einer Dosiereinrichtung zur Zugabe von Chemikalien gekoppelt ist und (v) die Trennvorrichtung zum Abtrennen von ausgefälltem phosphatreichem Feststoff aus phosphatarmem Medium vorgesehen ist.

Insbesondere können Rücklösebehälter und Fällungsbehälter einen maximalen Raum innerhalb des Gehäuses der mobilen Prozesseinheit einnehmen. Vorteilhaft kann insbesondere an bestehenden Kläranlagen eine Phosphorrückgewinnung erfolgen, ohne nennenswerte bauliche Veränderungen an der stationären Anlage vornehmen zu müssen. So kann die mobile Prozesseinheit an einen üblicherweise bereits vorhandenen stationären Sammelbehälter für Klärschlamm angekoppelt werden. In einem solchen stationären Sammelbehälter wird Klärschlamm gesammelt, um anschließend entsorgt zu werden. Häufig werden für derartige Behälter oder sonstige Komponenten der stationären Anlage sehr preiswerte Materialien eingesetzt, die sich für eine chemische Behandlung des darin befindlichen Klärschlamms nicht eignen, da sie beispielsweise nicht säureresistent sind. Die mobile Prozesseinheit erlaubt unabhängig vom Zustand oder der chemischen Eignung von Komponenten der stationären Anlage eine hocheffiziente chemisch-physikalische Behandlung des Klärschlamms. Weiterhin braucht der Betrieb der Kläranlage nicht unterbrochen werden, sondern kann ungestört weiterlaufen, während der gesammelte Klärschlamm behandelt wird.

Die Prozesseinheit kann mit allen notwendigen Mitteln und Komponenten ausgestattet sein, die für die Klärschlammbehandlung notwendig sind, unabhängig vom Zustand der stationären Anlage.

Dadurch, dass die Prozesseinheit mobil ist, kann diese, ja nach Bedarf, an einer Vielzahl von stationären Anlagen eingesetzt werden und von einer zur anderen stationären Anlage verbracht werden.

Nach einer günstigen Ausgestaltung kann zwischen der stationären Anlage und der mobilen Prozesseinheit eine lösbare Einspeiseleitung vorgesehen sein, durch welche das phosphorhaltige Medium aus der stationären Anlage in die mobile Prozesseinheit einführbar ist. Hierzu können erprobte Leitungsmaterialien, Kupplungen und Verschlüsse, wie sie etwa für Tankwagen üblich sind, eingesetzt werden.

Nach einer günstigen Ausgestaltung kann zwischen der stationären Anlage und der mobilen Prozesseinheit eine lösbare Rückspeiseleitung vorgesehen sein, durch welche das im Phosphorgehalt reduzierte Medium aus der mobilen Prozesseinheit in die stationäre Anlage rückspeisbar ist. Damit ist abgereinigtes Abwasser wieder für die stationäre Anlage verfügbar, deren Effizienz damit erhöht werden kann.

Nach einer günstigen Ausgestaltung kann die mobile Prozesseinheit einen transportablen Container oder ein selbstfahrendes Fahrzeug oder einen Fahrzeuganhänger umfassen. Es können Standardmodule verwendet werden, die für den Straßentransport geeignet sind. Diese weisen standardisierte Abmessungen auf, so dass eine Ausrüstung der mobilen Prozesseinheit ebenso standardisiert sein kann. Ein Fahrzeuganhänger oder ein Container kann an der stationären Anlage zeitweise abgestellt werden, während das Zugfahrzeug anderweitig eingesetzt wird, solange die Phosphorrückgewinnung dauert. Ein Fahrzeug kann nach Abschluss des Vorgangs schneller wieder von der stationären Anlage entfernt werden. Die mobile Prozesseinheit kann unproblematisch von einem Einsatz an einer stationären Anlage zum nächsten Einsatz an einer anderen stationären Anlage transportiert werden. In der mobilen Prozesseinheit können auch notwendige Analyseeinrichtungen vorgesehen sein, welche zur geeigneten Zudosierung von Chemikalien in verschiedenen Verfahrensschritten der Phosphorrückgewinnung notwendig sind.
Ebenso können geeignete Sicherheitseinrichtungen für Bedienpersonal und für Komponenten an Bord der mobilen Prozesseinheit vorgesehen sein.

Nach einer günstigen Ausgestaltung kann an die mobile Prozesseinheit eine mobile Presseneinheit ankoppelbar sein. Hier kann ausgenutzt werden, dass derartige mobile Presseneinheiten für Entwässerungsaufgaben bei Klärschlamm verfügbar sind. Diese können nunmehr auch bei der Phosphorrückgewinnung eingesetzt werden. Alternativ oder zusätzlich kann eine Presseneinheit auch in der mobilen Prozesseinheit vorgesehen sein oder eine stationäre Presseneinheit sein.

Nach einer günstigen Ausgestaltung kann die stationäre Anlage eine Kläranlage sein. Insbesondere kann die mobile Prozesseinheit mit einem Sammelbehälter für Klärschlamm und/oder Abwasser der stationären Anlage gekoppelt sein. Es können an der Kläranlage vorhandene Komponenten genutzt werden und durch die wenigstens zeitweise ankoppelbare mobile Prozesseinheit Klärschlamm als effiziente Quelle für eine Phosphorrückgewinnung genutzt werden. Der Betrieb der Kläranlage kann ungestört parallel dazu weiterlaufen.

Nach einer günstigen Ausgestaltung kann die mobile Prozesseinheit zur Kopplung mit einer Vielzahl von stationären Anlagen vorgesehen sein. Eine einzige mobile Prozesseinheit kann kostengünstig überregional an verschiedenen stationären Anlagen eingesetzt werden.

Nach einem weiteren Aspekt der Erfindung wird eine mobile Prozesseinheit für eine oder mehrere Phosphorrückgewinnungsanlagen vorgeschlagen, die insbesondere einer oder mehreren Phosphorrückgewinnungsanlagen zugeordnet ist, wobei in einem Gehäuse der mobilen Prozesseinheit ein Rücklösebehälter, ein Sammelbehälter, eine Filtrationseinheit sowie ein Fällungsbehälter angeordnet sind, und entlang einer Prozessrichtung des Mediums auf den Rücklösebehälter ein mit diesem verbundener Sammelbehälter, auf den Sammelbehälter eine mit diesem verbundene Filtrationseinheit, auf die Filtrationseinheit ein mit dieser verbundenen Fällungsbehälter folgt und auf den Fällungsbehälter eine mit diesem verbundene Trennvorrichtung folgt, wobei der Rücklösebehälter zum Rücklösen von Phosphat in einem zugeführten phosphorhaltigen Medium dient, wobei der Rücklösebehälter mit einer Dosiereinrichtung für Säure gekoppelt ist, der Sammelbehälter zum Sammeln des in einer an die Prozesseinheit angekoppelten mobilen Presseneinheit teilweise gereinigten Mediums vorgesehen ist, die Filtrationseinheit zur Bildung von Permeat und Retentat mit ihrer Retentatseite mit dem Sammelbehälter zur Rückleitung des Retentats aus der Filtrationseinheit in den Sammelbehälter verbunden ist, der Fällungsbehälter zum Ausfällen eines phosphatreichen Produkts aus dem Permeat vorgesehen ist, wobei der Fällungsbehälter mit einer Dosiereinrichtung zur Zugabe von Chemikalien gekoppelt ist und die Trennvorrichtung zum Abtrennen von ausgefälltem phosphatreichem Feststoff aus phosphatarmem Medium vorgesehen ist.

Die Filtrationseinheit kann insbesondere eine Ultrafiltrationseinheit sein. Die Ultrafiltrationseinheit kann eine keramische Ultrafiltrationsmembran aufweisen, die austauschbar sein kann. Vorteilhaft sind Porenweiten von weniger als 0,1 µm, bevorzugt weniger als 0,05 µm. Die Filtrationseinheit kann auch eine separate Einheit außerhalb der mobilen Prozesseinheit sein.

Die mobile Prozesseinheit kann insbesondere in einer Phosphorrückgewinnungsanlage eingesetzt werden, wie sie vorstehend beschrieben ist. Insbesondere kann die mobile Prozesseinheit zeitweise an eine stationäre Kläranlage angekoppelt werden. Bei Bedarf kann die mobile Prozesseinheit zu weiteren Kläranlagen bewegt werden.

Die mobile Prozesseinheit kann z.B. ein Container sein, der mit üblichen Lastkraftwagen transportiert werden kann, in dessen Inneren die notwendigen Komponenten für die chemische Behandlung des Mediums angeordnet sind. Es ist eine Presseneinheit vorgesehen, insbesondere eine Kammerfilterpresse, die ebenfalls als mobile Einheit ausgebildet ist und die mit der mobilen Prozesseinheit gekoppelt ist.

Der Rücklösebehälter ist zweckmäßigerweise mit einer Dosiereinrichtung, z.B. einer Dosierpumpe, für Säure, z.B. Schwefelsäure, gekoppelt. Vorteilhaft kann so viel Säure zudosiert werden, bis ein gewünschter pH-Wert eingestellt ist. Mit Vorteil ist ein Rührwerk im Rücklösebehälter vorgesehen, um das darin enthaltene Medium und die Säure zu homogenisieren. Es können sowohl eine Probenentnahmestelle als auch Sensoren zur Prozesskontrolle, z.B. pH-Sonden, Leitfähigkeitssensoren, Füllstandsensoren etc., am oder im Rücklösebehälter vorgesehen sein. Ferner können Einrichtungen wie Schaumbrecher und dergleichen vorgesehen sein, um ein übermäßiges Schäumen des mit Säure versetzten Mediums zu vermeiden.

Die mobile Prozesseinheit kann speziell für ihren Einsatzzweck optimiert ausgestattet sein. Durch ihre örtlich flexiblen Einsatzmöglichkeiten amortisieren sich dadurch entstehende Kosten schnell. In der mobilen Prozesseinheit können auch notwendige Analyseeinrichtungen vorgesehen sein, welche zur geeigneten Zudosierung von Chemikalien in verschiedenen Verfahrensschritten der Phosphorrückgewinnung notwendig sind. Ebenso können geeignete Sicherheitseinrichtungen für Bedienpersonal und für Komponenten an Bord der mobilen Prozesseinheit vorgesehen sein.

Nach einer günstigen Ausgestaltung kann dem Rücklösebehälter in Prozessrichtung eine Zerkleinerungseinheit vorgeschaltet sein. Durch die Zerkleinerungseinheit lassen sich Verzopfungen in den folgenden Verfahrensschritten in der mobilen Prozesseinheit vermeiden und die Entwässerungseigenschaften in einem Zwischenschritt mit einer Presseneinheit, insbesondere einer Kammerfilterpresse, nach der Rücklösung des Phosphats verbessern. Die Zerkleinerungseinheit kann geeignet ausgeführt sein, etwa als Zweiwellenzerkleinerer, Mazerator oder dergleichen.

Um das Medium in die mobile Prozesseinheit und gegebenenfalls die Zerkleinerungseinheit zu transportieren, kann eine selbstansaugende Pumpe eingesetzt werden, z.B. eine Exzenterschneckenpumpe. Dies erlaubt eine relativ große Saugstrecke bis zu 25 m zwischen einem Sammelbehälter für das phosphorhaltige Medium in der stationären Anlage und der mobilen Prozesseinheit.

Nach einer günstigen Ausgestaltung kann die erfindungsgemäß in Prozessrichtung zwischen dem Rücklösebehälter und dem Sammelbehälter angeordnete oder ankoppelbare Presseneinheit selbstansaugend ausgeführt sein.

Der Feststoff kann wieder der stationären Anlage zugeführt werden, während das filtrierte phosphorhaltige Medium weiter in der mobilen Prozesseinheit behandelt wird. Das filtrierte Medium kann mit einer Pumpe, insbesondere mit einer trockenlaufenden Pumpe wie einer Membranpumpe, in den Sammelbehälter befördert werden.

Denkbar ist, die Zerkleinerungseinheit und/oder den Rücklösebehälter durch eine Bypassleitung zu umgehen. Dies kann je nach Zustand des Ausgangsmaterials des phosphorhaltigen Mediums günstig sein und Zeit sparen. Das Medium kann dann direkt der Presseneinheit zur Entwässerung zugeführt werden.

Retentat ist aus der Filtrationseinheil zurück in den Sammelbehälter der mobilen Prozesseinheit und Permeat aus der Filtrationseinheit in den Fällungsbehälter leitbar. Bei dem Retentat wie auch bei dem Permeat handelt es sich um flüssige Medien. Das Permeat ist entwässertes, gereinigtes phosphorhaltiges Medium und kann mit einer Pumpe, insbesondere einer Kreiselpumpe, in den Fällungsbehälter gefördert werden.

Der Fällungsbehälter ist mit einer Dosiereinrichtung von Chemikalien gekoppelt. So kann eine Säure zugegeben werden, um Metallionen im phosphorreichen Medium zu komplexieren und als Metallkomplexe zu binden, um zu verhindern, dass bei einer anschließend durchgeführten Fällungsreaktion in unkontrollierter Weise Metallphosphate ausfallen. Die Metallionen können wie die Phosphorionen durch das anfängliche Ansäuern im Rücklösebehälter in das Medium gelangt sein. Nach der Komplexierung der Metalle kann die Zugabe eines Fällungsmittels, insbesondere Magnesiumoxid, erfolgen. Durch eine Zugabe des Fällungsmittels, insbesondere Magnesiumoxid, können Phosphorionen kontrolliert ausgefällt werden.

Zusätzlich kann ein Neutralisationsmittel zugegeben werden, insbesondere Natronlauge. Vorteilhaft wird dabei ein pH-Wert eingestellt, bei dem eine besonders effiziente Fällungsreaktion erfolgt.

Vorteilhaft ist der Fällungsbehälter mit einem Rührwerk zum Homogenisieren des Behälterinhalts versehen.

Nach einer günstigen Ausgestaltung kann zumindest der Sammelbehälter und/oder der Fällungsbehälter eine Probenentnahmestelle aufweisen. Vorteilhaft ist es weiterhin, in den Behältern Sensoren zur Prozessüberwachung vorzusehen. Durch die Probenentnahme kann das Zudosieren von notwendigen Chemikalien möglichst genau erfolgen.

Erfindungsgemäß ist den Fällungsbehälter eine Trennvorrichtung zum Abtrennen von ausgefälltem phosphatreichem Feststoff aus phosphatarmem Medium angeschlossen. Das Filtrat enthält eine oder mehrere auskristallisierte Phosphorverbindungen, insbesondere Magnesium-Ammonium-Phosphat, auch bekannt als MAP oder MAP-Hexahydrat. MAP ist auch als Struvit bekannt. Der Begriff "MAP" oder "MAP-Hexahydrat" wird im Kontext der Erfindung pauschal für Magnesium-Ammonium-Phosphat-Verbindungen verwendet. Das abgetrennte wässrige phosphatarme Medium kann wieder der stationären Anlage zugeführt und dort weiterverwertet werden. Die Trennvorrichtung kann ein Sieb sein, insbesondere ein motorbetriebenes Sieb, z.B. ein Entwässerungssieb mit Vibrationsmotor. Die Maschenweite des Siebs kann z.B. bei 100 µm liegen und gegebenenfalls durch eine andere Maschenweite ersetzt werden. Die entwässerten phosphathaltigen Kristalle können in einem Behälter gesammelt werden.

Vorteilhaft kann aus einem Kubikmeter Klärschlamm knapp 4 kg MAP-Hexahydrat gewonnen werden. Günstigerweise kann die mobile Prozesseinrichtung mit einem Aufnahmevermögen einer Charge von 7 m³ Klärschlamm ausgelegt werden. Dies ist in einem üblichen Containergehäuse realisierbar.

Nach einem weiteren Aspekt der Erfindung wird ein Verfahren zum Betreiben einer Phosphorrückgewinnungsanlage zur Rückgewinnung von Phosphor aus einem phosphorhaltigen Medium, insbesondere aus Klärschlamm und/oder Abwasser, vorgeschlagen. Das Verfahren ist gekennzeichnet durch die Schritte:
(a) Bereitstellen eines phosphorhaltigen Mediums in einer stationären Anlage;
(b) Ankoppeln einer erfindungsgemäßen mobilen Prozesseinheit an die stationäre Anlage;
(c) Einleiten des Mediums in die mobile Prozesseinheit;
(d) Extrahieren und/oder Kristallisieren des Phosphatanteils aus dem Medium in der mobilen Prozesseinheit.

Die stationäre Anlage kann insbesondere eine kommunale Kläranlage sein. Der Phosphatanteil kann vorteilhaft in Form von MAP / MAP-Hexahydrat gewonnen werden.

Die mobile Prozesseinheit kann z.B. ein Container sein, der mit üblichen Lastkraftwagen transportiert werden kann, in dessen Inneren die notwendigen Komponenten für die chemische Behandlung des Mediums angeordnet sind. Optional kann eine Presseneinheit vorgesehen sein, insbesondere eine Kammerfilterpresse, die ebenfalls als mobile Einheit ausgebildet sein kann und die zeitweise mit der mobilen Prozesseinheit gekoppelt sein kann.

Mit dem erfindungsgemäßen Verfahren werden die folgenden Schritte in der mobilen Prozesseinheit durchgeführt:
(i) Ansäuern des Mediums auf einen gewünschten pH-Wert in einem Rücklösebehälter, in dem Phosphat im zugeführten phosphorhaltigen Medium rückgelöst wird;
(ii) Abtrennen eines phosphatreichen Anteils des Mediums aus dem angesäuerten Medium in einer Presseneinheit, die zwischen dem Rücklösebehälter und dem Sammelbehälter angeordnet und ankoppelbar ist;
(iii) Abtrennen von organischen Bestandteilen aus dem phosphatreichen Anteil des Mediums in einer in der Prozesseinheit angeordneten oder separaten Filtrationseinheit, in der ein Retentat und ein Permeat gebildet wird, wobei die Filtrationseinheit mit ihrer Retentatseite mit einem Sammelbehälter zur Rückleitung des Retentats aus der Filtrationseinheit in den Sammelbehälter verbunden ist;
(iv) Komplexierung von Metallionen im Permeat und anschließendes Ausfällen von ein oder mehreren Phosphorverbindungen durch Erhöhen des pH-Werts des Permeats in einem Fällungsbehälter (170), in dem ein phosphatreiches Produkt ausgefällt wird; und
(vi) Abtrennen der ein oder mehreren Phosphorverbindungen aus dem Medium in einer Trennvorrichtung.

Alternativ kann statt einem getrennten Ansäuern des Mediums in einem Schritt und einer Komplexierung von Metallionen in einem separaten späteren Schritt die Komplexierung und das Ansäuern im gleichen Verfahrensschritt erfolgen, indem Säure und ein Komplexbildner zugegeben werden. Die weiteren Schritte Abtrennen eines phosphatreichen Anteils, Abtrennen von organischen Bestandteilen, Ausfällen von ein oder mehreren Phosphorverbindungen durch Erhöhen des pH-Werts des phosphatreichen Anteils des Mediums und Abtrennen der ein oder mehreren Phosphorverbindungen aus dem Medium können gleich bleiben. Beispielsweise kann im kombinierten Schritt Schwefelsäure zum Ansäuern und Zitronensäure als Komplexbildner zugegeben werden.

Wird der Komplexbildner, z.B. Zitronensäure, gleich beim Ansäuervorgang beigegeben (z.B. Zugabe von Schwefelsäure und Zitronensäure), kann der Gehalt an Schwermetallen im abgepressten Medium, z.B. Klärschlamm, vermindert werden. Dieser könnte sogar wieder zum Produktstrom werden und, wenn entsprechende Grenzwerte unterschritten sind, für eine landwirtschaftliche Ausbringung genutzt werden, oder aber ein Produkt, das aus dem Klärschlamm generiert wird, wäre weniger schwermetallbelastet.

Das Ansäuern dient zum Rücklösen von Phosphor aus im Medium, z.B. Klärschlamm, enthaltenen Metallphosphaten und wird vorteilhaft bei einem pH-Wertbereich von 4 bis 4,5 durchgeführt. Das Medium kann dabei zum Homogenisieren bewegt werden mit einer Einwirkzeit nach Erreichen eines stabilen pH-Endwerts von mindestens 15 min bis zu 60 min, vorzugsweise etwa 30 min.

Das Abtrennen des phosphatreichen Anteils des Mediums aus dem angesäuerten Medium erfolgt in einer Presseneinheit, welche das ganze Volumen des Rücklösebehälters aufnehmen kann, so dass der Rücklösebehälter wieder mit frischem Medium aus der stationären Anlage befüllt werden kann. Auf diese Weise ist ein effizienter Batchbetrieb möglich.

Das Abtrennen von organischen Bestandteilen aus dem phosphatreichen Anteil des Mediums kann vorteilhaft mittels Ultrafiltration erfolgen.

Das Ausfällen von ein oder mehreren Phosphorverbindungen, insbesondere MAP oder MAP-Hexahydrat, kann durch Erhöhen des pH-Werts des phosphatreichen Anteils des Mediums erfolgen. Hierzu wird eine Base zugegeben, insbesondere Natronlauge.

Dabei kann vor der Fällungsreaktion zunächst ein Komplexieren von unerwünschten Metallionen erfolgen, insbesondere mittels Zitronensäure in stöchiometrischem Verhältnis von 1:1 bezogen auf das Verhältnis von Zitronensäure zu Metall. Vorteilhaft ist eine Kontaktzeit von mindestens 15 min bis höchstens 60 min, vorzugsweise 30 min. Dies vermeidet ein späteres Ausfällen von unerwünschtem Metallphosphat. Als Fällungsmittel kann Magnesiumoxid zugegeben werden. Vorteilhaft ist ein Überschuss von Magnesiumoxid von 1,5 : 1 bezogen auf das Verhältnis von Magnesium zu Phosphat im Fällungsbehälter.

Durch Erhöhen des pH-Werts erfolgt die Fällungsreaktion besonders effizient. So setzt die MAP-Fällung bereits bei einem pH-Wert von 6 ein und erreicht bei einem pH-Wert von 8,2 ein Maximum. Vorteilhaft ist eine Zugabe von 5-6 Litern Natronlauge (25%ig) pro Kubikmeter behandeltem Klärschlamm. Vorzugsweise wird der pH-Wert innerhalb von 30 min eingestellt, mit einer darauffolgenden Agglomerationszeit von 60 min. Zweckmäßigerweise wird der Behälterinhalt in dieser Zeit gerührt.

Das Abtrennen der ein oder mehreren Phosphorverbindungen wie MAP und/oder MAP-Hexahydrat, aus dem Medium kann mit einer Siebanlage erfolgen.

Das Abtrennen des phosphatreichen Anteils des Mediums aus dem angesäuerten Medium wird außerhalb der mobilen Prozesseinheit in einer mobilen Presseneinheit durchgeführt, insbesondere in einer angekoppelten Kammerfilterpresse.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: schematisch eine Phosphorrückgewinnungsanlage nach einem Ausführungsbeispiel der Erfindung;
- Fig. 2: in Draufsicht einen Aufstellungsplan von Komponenten einer mobilen Prozesseinheit nach einem Ausführungsbeispiel der Erfindung; und
- Fig. 3: ein Fließschema einer Phosphorrückgewinnungsanlage nach einem Ausführungsbeispiel der Erfindung.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

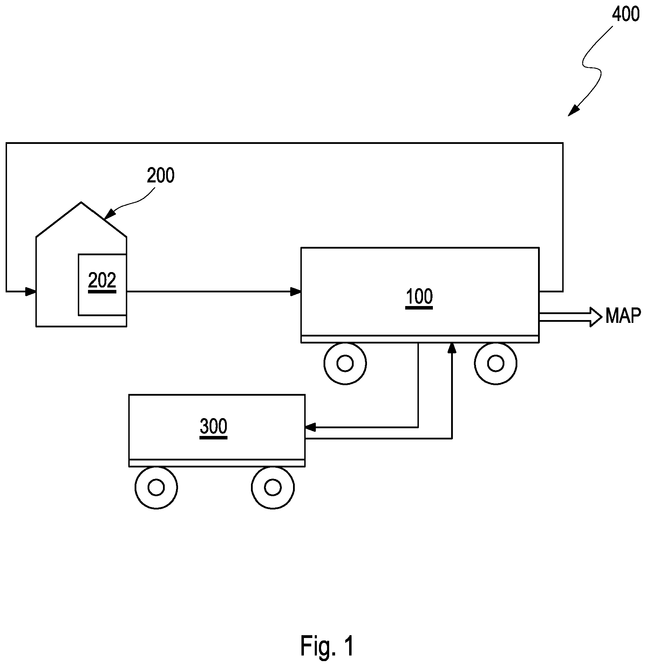

Figur 1 zeigt schematisch eine Phosphorrückgewinnungsanlage 400 nach einem Ausführungsbeispiel der Erfindung. Die Phosphorrückgewinnungsanlage 400 dient zur Rückgewinnung von Phosphor aus einem phosphorhaltigen Medium, insbesondere aus Klärschlamm und/oder Abwasser, und umfasst wenigstens eine mobile Prozesseinheit 100 zur chemischen Behandlung des phosphorhaltigen Mediums, welche zeitweise an eine stationäre Anlage 200 gekoppelt ist, welche das phosphorhaltige Medium bereitstellt.

Zwischen der stationären Anlage 200 und der mobilen Prozesseinheit 100 ist eine lösbare Einspeiseleitung vorgesehen, durch welche das phosphorhaltige Medium aus der stationären Anlage 200 in die mobile Prozesseinheit 100 einführbar ist. Ferner ist zwischen der stationären Anlage 200 und der mobilen Prozesseinheit 100 eine lösbare Rückspeiseleitung vorgesehen, durch welche das im Phosphorgehalt reduzierte Medium aus der mobilen Prozesseinheit 100 in die stationäre Anlage 200 rückspeisbar ist, während der zurückgewonnene Phosphor insbesondere in Form von kristallinem MAP und/oder MAP-Hexyhydrat entnommen wird. Dazu kann ein Behälter (nicht dargestellt) am Ausgang der mobilen Prozesseinheit 100 vorgesehen sein.

Die mobile Prozesseinheit 100 kann als transportabler Container mit Standardabmessungen oder als selbstfahrendes Fahrzeug oder als Fahrzeuganhänger ausgebildet sein.

Im Ausführungsbeispiel ist die stationäre Anlage 200 eine Kläranlage. Die mobile Prozesseinheit 100 ist mit einem Sammelbehälter 202 für Klärschlamm und/oder Abwasser der stationären Anlage 200 gekoppelt, der üblicherweise bei derartigen Anlagen vorhanden ist.

Das zu behandelnde Medium ist anaerob stabilisierter Klärschlamm von verschiedenen kommunalen Kläranlagen, welche Phosphorelimination z.B. mittels Eisen- und/oder Aluminiumsalzen betreiben. Alternative Fällungsmittel sind möglich. Die Beschaffenheit des Klärschlamms variiert zwischen den einzelnen Kläranlagen und jahreszeitlich bedingt.

Faulschlamm hat einen Feststoffgehalt von 1 Gew.% bis 5 Gew.%, bezogen auf das Gewicht. Die Feststoffe sind sowohl anorganische als auch organische Stoffe, z.B. Reste von Mikroorganismen einer biologischen Abwasserreinigung. Unter anaeroben Bedingungen setzen Mikroorganismen den leicht faulenden Anteil der organischen Substanz des ursprünglichen Rohschlamms unter Bildung von Faulgas zu Faulschlamm, d.h. stabilisiertem Klärschlamm, um. Diese Art der konventionellen Behandlung von Klärschlamm findet in Sammelbehältern 202, z.B. Faultürmen, der Kläranlagen statt.

Im Faulschlamm befindet sich Phosphor u.a. in Form von Metallphosphaten [Me-PO₄] gebunden. Um die unterschiedlichen Phosphorverbindungen in gelöstes ortho-Phosphat [PO₄-P] zu bringen, wird der anaerob stabilisierte Klärschlamm angesäuert.

An die mobile Prozesseinheit 100 ist eine mobile Presseneinheit 300 angekoppelt, um in einem Zwischenschritt den zu behandelnden Klärschlamm zu entwässern.

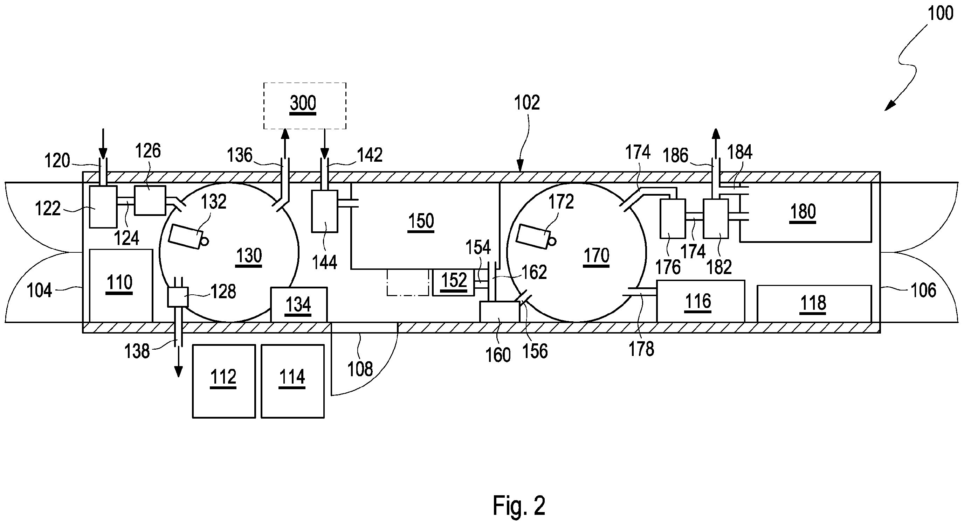

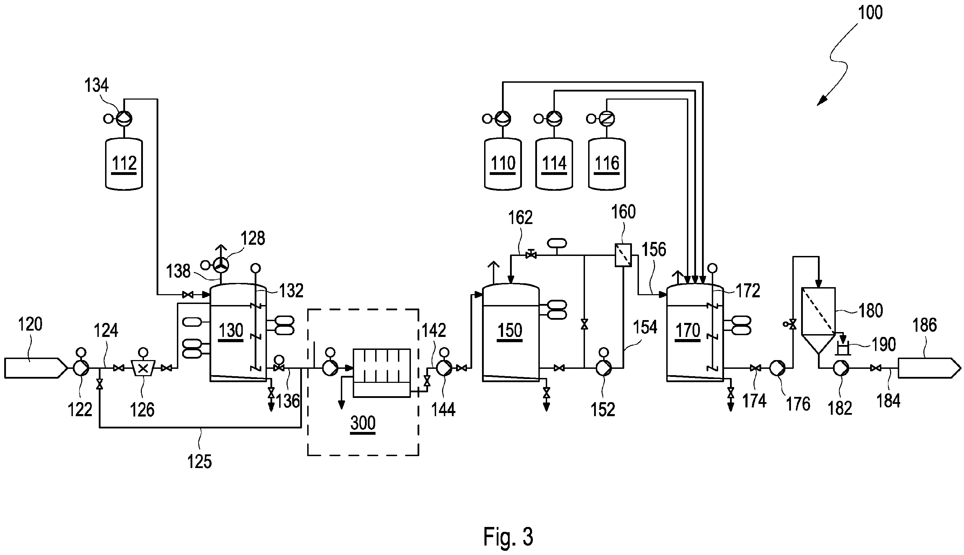

Figur 2 zeigt in Draufsicht einen Aufstellungsplan von Komponenten einer mobilen Prozesseinheit 100 nach einem Ausführungsbeispiel der Erfindung. Figur 3 zeigt ein entsprechendes Fließschema der Phosphorrückgewinnungsanlage mit mobiler Prozesseinheit 100 nach einem Ausführungsbeispiel der Erfindung.

Die mobile Prozesseinheit 100 ist z.B. als Container ausgebildet mit einem geschlossenen Gehäuse 102 und jeweils verschließbaren Öffnungen 104, 106 an den Schmalseiten des Gehäuses 102, durch welche die Komponenten in das Innere des Gehäuses 102 eingebracht werden können. Eine verschließbare Öffnung 106 an einer Seitenwand dient dem Zugang ins Innere des Gehäuses 102 für Bedienpersonal. Zur Ortsveränderung kann der Container auf einen Lastkraftwagen geladen und transportiert werden. Die Ausführung als geschlossener Container ermöglicht den einfachen Transport und den Schutz der mobilen Prozesseinheit vor Frost und Witterungseinflüssen. Alle Komponenten im Gehäuse 102 sind korrosionsresistent ausgelegt.

In Prozessrichtung des Mediums, die im Wesentlichen von der einen Schmalseite zur gegenüberliegenden Schmalseite des Gehäuses 102 verläuft, ist ein Rücklösebehälter 130 zum Rücklösen von Phosphat im zugeführten phosphorhaltigen Medium, ein Sammelbehälter 150 zum Sammeln des teilweise gereinigten Mediums, ein Fällungsbehälter 170 zum Ausfällen eines phosphatreichen Produkts und eine Trennvorrichtung 180 angeordnet. Außerhalb des Gehäuses 102 sind ein Vorratsbehälter 112 für Säure, z.B. Schwefelsäure, und ein Vorratsbehälter 114 für eine Lauge, z.B. Natronlauge, angeordnet, die in den Rücklösebehälter 130 (Schwefelsäure) und in den Fällungsbehälter 170 (Natronlauge) zudosiert werden können. Dazu sind geeignete Durchführungen durch das Gehäuse 102 vorgesehen (nicht dargestellt). Innerhalb des Gehäuses ist ein Vorratsbehälter 110 für einen Komplexbildner, z.B. Zitronensäure und ein Vorratsbehälter 116 für ein Fällungsmittel, z.B. Magnesiumoxid, angeordnet.

Die Vorratsbehälter 110, 112, 114, 116 sind jeweils mit geeigneten Dosiereinrichtungen, z.B. Dosierpumpen, ausgestattet. Für die Zudosierung von Feststoffen ist z.B. ein Förderschneckendosierer vorgesehen.

Alle Behälter 130, 150, 170 sind zweckmäßigerweise so ausgebildet, dass diese vollständig entleert werden können, z.B. mit Schrägböden.

Der Rücklösebehälter 130 und der Fällungsbehälter 170 weisen einen zylinderförmigen Querschnitt auf, dessen Durchmesser das Innere des Gehäuses 102 ausfüllt. In den Behältern 130, 170 sind jeweils Rührwerke 132, 172 angeordnet, so dass der jeweilige Inhalt bewegt und homogenisiert werden kann.

Der dazwischen angeordnete Sammelbehälter 150 ist rechteckig ausgebildet. Die seitliche Öffnung 108 erlaubt den Zugang zum mittleren Bereich der mobilen Prozesseinheit 100.

Das zu behandelnde Medium, z.B. stabilisierter Klärschlamm, wird über eine Pumpleitung 120 in den Prozessbereich der mobilen Prozesseinheit 100 mittels einer Pumpe 122, z.B. einer selbstansaugenden Exzenterschneckenpumpe, angesaugt. Der Abstand zum Sammelbehälter 202 der Kläranlage kann typischerweise bis zu 25 m betragen. Die Pumpe ist z.B. auf einen Volumenstrom von 20-40 m3/h, z.B. 25 m3/h ausgelegt. Das angesaugte Medium gelangt über eine in einer Verbindungsleitung 124 angeordneten Zerkleinerungseinheit 126, z.B. einen Mazerator oder Zweiwellenzerkleinerer, in den Rücklösebehälter 130.

Der Rücklösebehälter 130 ist geschlossen ausgeführt. Um einen möglichst hohen Füllstand zu ermöglichen, wird die benötigte Höhe auf dessen Behälterdach für das Rührwerk 132 möglichst gering gehalten, z.B. durch einen horizontal angeordneten Rührwerkmotor. Aufgrund von Schaumbildung kann der Rücklösebehälter 130 nicht vollständig gefüllt werden. Zwischen Behälterdach und Flüssigkeitsspiegel muss ein Abstand von rund 0,3 m eingehalten werden. Um die Rührwirkung des Rührwerks 132 zu verbessern, kann dieses exzentrisch angeordnet sein und/oder Strömungsbrecher im Behälterinnern vorgesehen sein. Ein Ventilator 128 hält den Rücklösebehälter 130 permanent unter Unterdruck und entlässt die abgesaugte Luft über eine Pumpleitung 138 in die Atmosphäre. Der Rücklösebehälter 130 ist mit zwei pH-Sonden, einer Leitfähigkeitssonde, einem Füllstandsensor sowie einer Überfüllsicherung ausgestattet. Der pH-Wert wird im oberen und im unteren Bereich des Rücklösebehälters 130 bestimmt. Die pH-Sonden sind auch im Betrieb bei befülltem Rücklösebehälter 130 für regelmäßige Inspektion und Reinigung zugänglich. Eine Probenentnahmestelle (nicht dargestellt) ermöglicht die Entnahme von Proben des Mediums an einer zugänglichen Stelle. Eine Dosierpumpe 134 befördert Säure aus dem Vorratsbehälter 114, z.B. 78%-ige Schwefelsäure, in den Rücklösebehälter 130.

Die Befüllung des Rücklösebehälters 130 mit dem phosphorhaltigen Medium erfolgt (über den Zerkleinerer 126) mit der Pumpe 122. Das Rührwerk 132 wird ab einem wählbaren Füllstand gestartet und kurz darauf mit der Zudosierung der Säure begonnen, bis ein vorgegebener pH-Wert erreicht ist, z.B. ein pH-Wert von 4,5. Durch die Säurezugabe wird im Wesentlichen das im Medium enthaltene Phosphat in Lösung gebracht.

Wegen der Puffereigenschaften des Mediums ist nach erstmaligem Erreichen des Zielwerts des pH-Werts von einer Nachregelzeit für die Säuredosierung auszugehen, z.B. 30 min, um den pH-Wert zu stabilisieren. Der Bedarf an Säure ist medienabhängig und beträgt z.B. für Faulschlamm ca. 5 Liter pro Kubikmeter Faulschlamm. Die benötigte Zeitdauer für das Ansäuern des Mediums im Rücklösebehälter 130 kann durch geeignete Maßnahmen reduziert werden. Dies ist zum einen die Sicherstellung einer intensiven Durchmischung im Rücklösebehälter 130. Außerdem erfolgt die Zudosierung der benötigten Säure möglichst rasch, z.B. durch eine einstellbare Vorsteuerung mit anschließender Feinregelung abhängig vom pH-Wert. Durch die Säurezugabe kommt es zum Ausgasen von Kohlenstoffdioxid und einer entsprechenden Schaumbildung im Rücklösebehälter 130.

Das im Rücklösebehälter 130 angesäuerte Medium wird nach Erreichen des gewünschten pH-Werts einer Presseneinheit 300 zugeführt, z.B. einer Kammerfilterpresse, die extern angekoppelt ist. Die Presseneinheit 300 ist über verschließbare Rohrleitungen 136 und 142 mit der mobilen Prozesseinheit 100 verbunden und ist z.B. selbstansaugend ausgebildet. Für eine Kommunikation der mobilen Prozesseinheit 100 und der Presseneinheit 300 sind entsprechende Datenleitungen zwischen den Einheiten 100, 300 vorgesehen. Hierzu ist eine Steuer- und/oder Regeleinrichtung 118 der mobilen Prozesseinheit 100 unter anderem ausgebildet. Diese ist unter anderem mit den Sensoren und Antrieben der Komponenten der mobilen Prozesseinheit 100 verbunden.

Ist der gewünschte pH-Wert am Ende der Nachregelzeit im Rücklösebehälter 130 stabil erreicht, wird ein Freigabesignal von der mobilen Prozesseinheit 100 an die Presseneinheit 300 ausgegeben und eine, vorzugsweise elektrisch ansteuerbare, Absperrarmatur in der Verbindungsleitung 136 geöffnet. Die Presseneinheit 300 saugt daraufhin den Behälterinhalt mit einem Volumenstrom von anfangs einem Wert wie dem Volumenstrom der Pumpe 122 an, z.B. 25 m3/h und reduziert diesen dann, z.B. bis auf ca. 3 m3/h und führt eine Fest-Flüssig-Trennung durch. Beim Erreichen eines minimalen Füllstands im Rücklösebehälter 130 schaltet die Pumpe der Presseneinheit 300 ab, und die Absperrarmatur in der Verbindungsleitung 136 wird geschlossen. Daraufhin kann der Rücklösebehälter 130 mit der nächsten frischen Charge phosphorhaltigen Mediums befüllt werden.

Nach einer nicht erfindungsgemäßen Ausgestaltung kann die Zerkleinerungseinheit 126 und der Rücklösebehälter 130 mit einer Bypassleitung 125 (Figur 3) umgangen werden und das Medium direkt in die Presseneinheit 300 geleitet werden.

Alternativ kann statt einem getrennten Ansäuern des Mediums in einem Schritt im Rücklösebehälter 130 und einer Komplexierung von Metallionen im Fällungsbehälter 170 in einem separaten späteren Schritt die Komplexierung und das Ansäuern im gleichen Verfahrensschritt im Rücklösebehälter 130 erfolgen, indem Säure (z.B. Schwefelsäure) und ein Komplexbildner (z.B. Zitronensäure) zugegeben werden. Die weiteren Schritte Abtrennen eines phosphatreichen Anteils, Abtrennen von organischen Bestandteilen, Ausfällen von ein oder mehreren Phosphorverbindungen durch Erhöhen des pH-Werts des phosphatreichen Anteils des Mediums und Abtrennen der ein oder mehreren Phosphorverbindungen aus dem Medium können gleich bleiben. Wird der Komplexbildner, z.B. Zitronensäure, gleich beim Ansäuervorgang beigegeben (z.B. Schwefelsäure und Zitronensäure), kann der Gehalt an Schwermetallen in dem in der Presseneinheit 300 abgepressten Medium, z.B. Klärschlamm, vermindert werden. Dieser könnte sogar wieder zum Produktstrom werden und, wenn entsprechende Grenzwerte unterschritten sind, für eine landwirtschaftliche Ausbringung genutzt werden, oder aber ein Produkt, das aus dem Klärschlamm generiert wird, wäre weniger schwermetallbelastet.

Das phosphatreiche Filtrat aus der Presseneinheit 300 wird über eine Pumpleitung 142 mittels einer Pumpe 144 in einen Sammelbehälter 150 zurück in die mobile Prozesseinheit 100 gefördert und von dort mittels einer Pumpe 152 über eine Pumpleitung 154 in eine Filtrationseinheit 160 gefördert. Dort werden organische Bestandteile entfernt. Das gereinigte Permeat gelangt über eine Verbindungsleitung 156 in den Fällungsbehälter 170, während das Retentat über die Leitung 162 zurück in den Sammelbehälter geleitet wird. Das Entfernen der organischen Bestandteile erhöht die Qualität des Endprodukts, da organische Bestandteile zu unerwünschten Eigenschaften, wie z.B. einer Verfärbung und Geruch, führen.

Die Pumpe 144 saugt das Filtrat aus der Presseneinheit 300 ab, welches diskontinuierlich anfällt. Die Pumpe 144 kann das Filtrat vollständig absaugen, so dass an der Presseneinheit 300 kein Pufferbehälter notwendig ist. Der anfallende Volumenstrom an Filtrat entspricht dem anfänglichen Volumenstrom der Presseneinheit 300 und fällt dann entsprechend ab. Die Pumpe 144 ist z.B. selbstansaugend und trockenlauffähig, beispielsweise eine Membranpumpe.

Der Sammelbehälter 150 verfügt über eine Füllstandsmessung, eine Überfüllsicherung, eine Entlüftung in die Atmosphäre sowie eine Probenentnahmestelle. Das Volumen des Sammelbehälters 150 richtet sich nach der Chargengröße im Rücklösebehälter 130. Pro Kubikmeter Faulschlamm fallen z.B., abhängig vom Medium, zwischen 0,8 und 0,92 Kubikmeter Filtrat an.

Die Filtrationseinheit 160 ist z.B. eine Ultrafiltrationseinheit mit einer keramischen Membran geringer Porenweite. Die Pumpe 152, z.B. eine Kreiselpumpe, wird bei Erreichen eines einstellbaren Füllstands im Sammelbehälter 150 gestartet. Das Retentat der Filtrationseinheit 160 wird über ein Überströmventil mit einstellbarem Druck zurück in den Sammelbehälter 150 geleitet. Bei Erreichen eines einstellbaren minimalen Füllstands des Sammelbehälters 150 wird die Pumpe 152 ausgeschaltet. Das im Sammelbehälter 150 verbleibende Medium verbleibt dort bis zur nächsten Charge oder kann über eine Restentleerung entsorgt werden. Der Permeat-Volumenstrom wird so gewählt, dass der Ultrafiltrationsprozess in einer gewünschten Zeit, z.B. maximal 30 min, abgeschlossen ist.

Das in der Filtrationseinheit 160 filtrierte Medium wird zunächst im Fällungsbehälter 170 gesammelt. Nach Abschluss der Filtration werden aufeinander folgend die Prozessschritte Komplexierung, Fällung und Neutralisation und Kristallisation des Endprodukts durchgeführt, vorzugsweise unter ständigem Rühren des Rührwerks 172. Der Fällungsbehälter 170 verfügt über ein Rührwerk 172, einen Füllstandsensor, eine pH-Sonde, einen Leitfähigkeitssensor, eine Überfüllsicherung, eine Entlüftung in die Atmosphäre sowie eine Probenentnahmestelle.

Das Komplexieren wird durchgeführt, da durch das Ansäuern im Rücklösebehälter 130 neben Phosphationen auch Metallionen, wie Eisen, Aluminium, Calcium und Magnesium, rückgelöst werden. Als Kompexbildner wird eine Säure, z.B. Zitronensäure, aus dem Vorratsbehälter 110 in den Fällungsbehälter 170 zugegeben. Der Komplexbildner hat die Aufgabe, diese Metalle zu binden und zu verhindern, dass diese später wieder als Metallphosphate ausfallen. Die Dosierung des Komplexbildners hängt von der Konzentration der Metallionen ab. Es wird ein stöchiometrisches Verhältnis von Komplexbildner und Metall eingesetzt (Verhältnis Komplexbildner: Metall = 1:1). Hierfür werden die molaren Mengen der Metalle analytisch nach Probennahme bestimmt. Dies kann z.B. im Rücklösebehälter 130 und/oder im Sammelbehälter 150 und/oder im Fällungsbehälter 170 erfolgen. Die sich daraus ergebende Menge an Komplexbildner wird dem Fällungsbehälter 170 auf einmal zugegeben. Anschließend ist eine Kontaktzeit, z.B. 30 min, für die Reaktion abzuwarten. Als Anhaltswert für die Auslegung der Dosierpumpe für Zitronensäure kann von einem durchschnittlichen Bedarf an 50%-iger Zitronensäure von 4,6 Litern je Kubikmeter Faulschlamm ausgegangen werden. Bei einer Chargengröße von 7 m³ müssen also 32 Liter in einer Zeitspanne von maximal 10 min zudosiert werden. Der Volumeninhalt entspricht dem des Rücklösebehälters 130. Der pH-Wert und die elektrische Leitfähigkeit werden im unteren Behälterbereich gemessen. Die Sonden und Sensoren sind auch bei befülltem Behälter für regelmäßige Inspektion und Reinigung zugänglich.

Nach der Komplexierung der Metalle erfolgt die Zugabe des Fällungsmittels, z.B. pulverförmiges Magnesiumoxid (92%-ig), aus dem Vorratsbehälter 116 über eine Dosiereinrichtung 178, z.B. ein Förderschneckendosierer. Magnesium wird dem Medium in einem molaren Verhältnis zu ortho-Phosphat von 1,5 : 1 (Mg : PO₄) zudosiert. Die Konzentration an ortho-Phosphat wird analytisch in einer am Fällungsbehälter 170 entnommenen Probe bestimmt. Das Magnesiumoxid wird diskontinuierlich in Intervallen zugegeben. Für die Auslegung der Feststoffdosierung kann von einem Verbrauch von Magnesiumoxid von 0,9 kg je Kubikmeter Faulschlamm ausgegangen werden. Bei einer Chargengröße von 7 m³ Faulschlamm entspricht dies 6,3 kg Magnesiumoxid. Diese Menge wird innerhalb von maximal 30 min zugegeben.

Nach vollständiger Zugabe von Magnesiumoxid kann ohne Wartezeit die Neutralisation erfolgen, z.B. durch Zugabe von Natronlauge. Durch Zugabe der Natronlauge wird der pH-Wert im Fällungsbehälter 170 auf 8,2 angehoben. In diesem Bereich findet eine optimale MAP-Fällung statt, wobei die Kristallisation bei einem pH-Wert von 6,0 einsetzt. Der Bedarf an Natronlauge (25%-ig) liegt ungefähr bei 5,6 Litern pro Kubikmeter behandeltem Faulschlamm. Bei einer Chargengröße von 7 m³ ergibt sich ein Bedarf von 39 Liter Natronlauge. Der ZielpH-Wert wird innerhalb von z.B. 30 min eingestellt. Daran schließt sich eine Agglomerationszeit, z.B. 60 min, an, während derer MAP auskristallisiert. In dieser Zeit wird der Behälterinhalt weiter gerührt.

Nach Abschluss der Agglomerationszeit wird das Medium mit den auskristallisierten MAP-Kristallen zur Entwässerung mittels einer Pumpe 176 über eine Pumpleitung 174 in die Trennvorrichtung 180 geleitet.

Die Trennvorrichtung 180 ist z.B. als motorbetriebenes Sieb in Form eines Entwässerungssiebs mit Vibrationsmotor ausgeführt. Die Maschenweite beträgt z.B. 100 µm, kann jedoch bei Bedarf auch umgerüstet werden. Das entwässerte Produkt, z.B. in Form von MAP-Kristallen, kann in einem Behälter 190 (Figur 3) gesammelt werden, welcher zweckmäßigerweise die Produktmenge einer Charge vollständig aufnehmen kann. Pro Kubikmeter behandeltem Faulschlamm entstehen etwa 3,9 kg MAP-Hexahydrat. Eine Charge von 7 m³ Faulschlamm ergibt somit rund 27 kg MAP bzw. MAP-Hexahydrat.

Die Beschickung der Trennvorrichtung 180 kann mit einstellbarem Volumenstrom erfolgen, um Entwässerungsergebnisse zu optimieren. Hierfür kann ein Regelventil stromab der Pumpe 176 vorgesehen sein. Das Filtrat der Trennvorrichtung 180 wird im Sumpf des Siebs gesammelt und mittels einer Pumpe 182 über eine Pumpleitung 184 zum Ausgang 186 der mobilen Prozesseinrichtung 100 und zurück in die stationäre Anlage geleitet. Dies kann abhängig vom Füllstand in der Trennvorrichtung erfolgen.
- 100: mobile Prozesseinheit
- 102: Gehäuse
- 104: Öffnung
- 106: Öffnung
- 108: Öffnung
- 110: Vorratsbehälter
- 112: Vorratsbehälter
- 114: Vorratsbehälter
- 116: Vorratsbehälter
- 118: Regeleinrichtung
- 120: Pumpleitung
- 122: Pumpe
- 124: Verbindungsleitung
- 125: Bypassleitung
- 126: Zerkleinerungseinheit
- 128: Ventilator
- 130: Rücklösebehälter
- 132: Rührwerk
- 134: Dosierpumpe
- 136: Rohrleitung
- 138: Pumpleitung
- 142: Rohrleitung
- 144: Pumpe
- 150: Sammelbehälter
- 152: Pumpe
- 154: Pumpleitung
- 156: Verbindungsleitung
- 160: Filtrationseinheit
- 162: Leitung
- 170: Fällungsbehälter
- 172: Rührwerk
- 174: Pumpleitung
- 176: Pumpe
- 178: Dosiereinrichtung
- 180: Trennvorrichtung
- 182: Pumpe
- 184: Pumpleitung
- 186: Ausgang
- 190: Behälter
- 200: stationäre Anlage
- 202: Sammelbehälter
- 300: mobile Presseneinheit
- 400: Phosphorrückgewinnungsanlage

## Patentansprüche

1. Phosphorrückgewinnungsanlage (400) zur Rückgewinnung von Phosphor aus einem phosphorhaltigen Medium, insbesondere aus Klärschlamm und/oder Abwasser, mit einer stationären Anlage (200), welche das phosphorhaltige Medium bereitstellt, und wenigstens einer mobilen Prozesseinheit (100) zur chemischen Behandlung des phosphorhaltigen Mediums, welche an die stationäre Anlage (200) gekoppelt ist, wobei die mobile Prozesseinheit (100) in einem transportablen Gehäuse (102) einen Rücklösebehälter (130), einen Sammelbehälter (150), eine Filtrationseinheit (160), einen Fällungsbehälter (170) sowie eine Trennvorrichtung (180) umfasst, **dadurch gekennzeichnet, dass** entlang einer Prozessrichtung des Mediums auf den Rücklösebehälter (130) ein mit diesem verbundener Sammelbehälter (150), auf den Sammelbehälter (150) eine mit diesem verbundene Filtrationseinheit (160), auf die Filtrationseinheit (160) ein mit dieser verbundenen Fällungsbehälter (170) und auf den Fällungsbehälter (170) eine mit diesem verbundene Trennvorrichtung (180) folgt, wobei
(i) der Rücklösebehälter (130) zum Rücklösen von Phosphat im zugeführten phosphorhaltigen Medium mit einer Dosiereinrichtung (134) für Säure gekoppelt ist,
(ii) der Sammelbehälter (150) vorgesehen ist zum Sammeln des in einer an die Prozesseinheit (100) extern angekoppelten mobilen Presseneinheit (300) teilweise gereinigten Mediums, wobei der mobilen Presseneinheit (300) angesäuertes Medium aus dem Rücklösebehälter (130) zugeführt wird,
(iii) die Filtrationseinheit (160) zur Bildung von Permeat und Retentat aus dem teilweise gereinigten Medium vorgesehen ist, wobei die Filtrationseinheit (160) mit ihrer Retentatseite mit dem Sammelbehälter (150) zur Rückleitung des Retentats aus der Filtrationseinheit (160) in den Sammelbehälter (150) verbunden ist,
(iv) der Fällungsbehälter (170) zum Ausfällen eines phosphatreichen Produkts aus dem Permeat vorgesehen ist und mit einer Dosiereinrichtung (178) zur Zugabe von Chemikalien gekoppelt ist, und
(v) die Trennvorrichtung (180) zum Abtrennen von ausgefälltem phosphatreichem Feststoff aus phosphatarmem Medium vorgesehen ist.

2. Phosphorrückgewinnungsanlage nach Anspruch 1, **dadurch gekennzeichnet, dass** zwischen der stationären Anlage (200) und der mobilen Prozesseinheit (100) eine lösbare Einspeiseleitung vorgesehen ist, durch welche das phosphorhaltige Medium aus der stationären Anlage (200) in die mobile Prozesseinheit (100) einführbar ist.

3. Phosphorrückgewinnungsanlage nach Anspruch 1 oder 2, **dadurch gekennzeichnet, dass** zwischen der stationären Anlage (200) und der mobilen Prozesseinheit (100) eine lösbare Rückspeiseleitung vorgesehen ist, durch welche das im Phosphorgehalt reduzierte Medium aus der mobilen Prozesseinheit (100) in die stationäre Anlage (200) rückspeisbar ist.

4. Phosphorrückgewinnungsanlage nach einem der vorhergehenden Ansprüche, **dadurch gekennzeichnet, dass** die mobile Prozesseinheit (100) einen transportablen Container oder ein selbstfahrendes Fahrzeug oder einen Fahrzeuganhänger umfasst.

5. Phosphorrückgewinnungsanlage nach einem der vorhergehenden Ansprüche, **dadurch gekennzeichnet, dass** die stationäre Anlage (200) eine Kläranlage ist.

6. Phosphorrückgewinnungsanlage nach Anspruch 5, **dadurch gekennzeichnet, dass** die mobile Prozesseinheit (100) mit einem Sammelbehälter (202) für Klärschlamm und/oder Abwasser der stationären Anlage (200) gekoppelt ist.

7. Phosphorrückgewinnungsanlage nach einem der vorhergehenden Ansprüche, **dadurch gekennzeichnet, dass** die mobile Prozesseinheit (100) zur Kopplung mit einer Vielzahl von stationären Anlagen (200) vorgesehen ist.

8. Mobile Prozesseinheit (100) für eine Phosphorrückgewinnungsanlage (400), insbesondere nach einem der vorhergehenden Ansprüche, wobei in einem transportablen Gehäuse (102) ein Rücklösebehälter (130), ein Sammelbehälter (150), eine Filtrationseinheit (160), ein Fällungsbehälter (170) sowie eine Trennvorrichtung (180) angeordnet sind, **dadurch gekennzeichnet, dass** entlang einer Prozessrichtung des Mediums auf den Rücklösebehälter (130) ein mit diesem verbundener Sammelbehälter (150), auf den Sammelbehälter (150) eine mit diesem verbundene Filtrationseinheit (160), auf die Filtrationseinheit (160) ein mit dieser verbundenen Fällungsbehälter (170) folgt und auf den Fällungsbehälter (170) eine mit diesem verbundene Trennvorrichtung (180) folgt, wobei
der Rücklösebehälter (130) zum Rücklösen von Phosphat im zugeführten phosphorhaltigen Medium mit einer Dosiereinrichtung (134) für Säure gekoppelt ist;
der Sammelbehälter (150) zum Sammeln des in einer an die Prozesseinheit (100) extern angekoppelten mobilen Presseneinheit (300) teilweise gereinigten Mediums vorgesehen ist, wobei der mobilen Presseneinheit (300) angesäuertes Medium aus dem Rücklösebehälter (130) zugeführt wird, die Filtrationseinheit (160) zur Bildung von Permeat und Retentat mit ihrer Retentatseite mit dem Sammelbehälter (150) zur Rückleitung des Retentats aus der Filtrationseinheit (160) in den Sammelbehälter (150) verbunden ist, der Fällungsbehälter (170) zum Ausfällen eines phosphatreichen Produkts aus dem Permeat vorgesehen ist, wobei der Fällungsbehälter (170) mit einer Dosiereinrichtung (178) zur Zugabe von Chemikalien gekoppelt ist,
und
die Trennvorrichtung (180) zum Abtrennen von ausgefälltem phosphatreichem Feststoff aus phosphatarmem Medium vorgesehen ist.

9. Prozesseinheit nach Anspruch 8, **dadurch gekennzeichnet, dass** dem Rücklösebehälter (130) in Prozessrichtung eine Zerkleinerungseinheit (126) vorgeschaltet ist.

10. Prozesseinheit nach einem der Ansprüche 8 bis 9, **dadurch gekennzeichnet, dass** zumindest der Sammelbehälter (150) und/oder der Fällungsbehälter (170) eine Probenentnahmestelle aufweisen.

11. Verfahren zum Betreiben einer Phosphorrückgewinnungsanlage (400) zur Rückgewinnung von Phosphor aus einem phosphorhaltigen Medium, insbesondere aus Klärschlamm und/oder Abwasser, **gekennzeichnet durch** die Schritte:
(a) Bereitstellen eines phosphorhaltigen Mediums in einer stationären Anlage (200);
(b) Ankoppeln einer mobilen Prozesseinheit (100), die nach einem der Ansprüche 8 bis 10 ausgebildet ist, an die stationäre Anlage (200);
(c) Einleiten des Mediums in die mobile Prozesseinheit (100);
(d) Extrahieren und/oder Kristallisieren des Phosphatanteils aus dem Medium in der mobilen Prozesseinheit (100),
wobei in der mobilen Prozesseinheit (100) in Prozessrichtung des Mediums folgende Schritte durchgeführt werden
(i) Ansäuern des Mediums auf einen gewünschten pH-Wert in einem Rücklösebehälter (130), in dem Phosphat im zugeführten phosphorhaltigen Medium rückgelöst wird,
(ii) Abtrennen eines phosphatreichen Anteils des Mediums aus dem angesäuerten Medium in einer Presseneinheit (300), die zwischen dem Rücklösebehälter (130) und dem Sammelbehälter (150) angeordnet und ankoppelbar ist;
(iii) Abtrennen von organischen Bestandteilen aus dem phosphatreichen Anteil des Mediums in einer in der Prozesseinheit (100) angeordneten oder separaten Filtrationseinheit (160), in der ein Retentat und ein Permeat gebildet wird, wobei die Filtrationseinheit (160) mit ihrer Retentatseite mit einem Sammelbehälter (150) zur Rückleitung des Retentats aus der Filtrationseinheit (160) in den Sammelbehälter (150)
(iv) Komplexierung von Metallionen im Permeat und anschließendes Ausfällen von ein oder mehreren Phosphorverbindungen durch Erhöhen des pH-Werts des Permeats in einem Fällungsbehälter (170), in dem ein phosphatreiches Produkt ausgefällt wird; und
(v) Abtrennen der ein oder mehreren Phosphorverbindungen aus dem Medium in einer Trennvorrichtung (180).

12. Verfahren zum Betreiben einer Phosphorrückgewinnungsanlage (400) zur Rückgewinnung von Phosphor aus einem phosphorhaltigen Medium, insbesondere aus Klärschlamm und/oder Abwasser, **gekennzeichnet durch** die Schritte:
(a) Bereitstellen eines phosphorhaltigen Mediums in einer stationären Anlage (200);
(b) Ankoppeln einer mobilen Prozesseinheit (100), die nach einem der Ansprüche 8 bis 10 ausgebildet ist, an die stationäre Anlage (200);
(c) Einleiten des Mediums in die mobile Prozesseinheit (100);
(d) Extrahieren und/oder Kristallisieren des Phosphatanteils aus dem Medium in der mobilen Prozesseinheit (100),
wobei in der mobilen Prozesseinheit (100) in Prozessrichtung des Mediums folgende Schritte durchgeführt werden
(i) Ansäuern des Mediums auf einen gewünschten pH-Wert mit gleichzeitiger Komplexierung von Metallionen im phosphatreichen Anteil des Mediums in einem Rücklösebehälter (130), in dem Phosphat im zugeführten phosphorhaltigen Medium rückgelöst wird;
(ii) Abtrennen eines phosphatreichen Anteils des Mediums aus dem angesäuerten Medium in einer Presseneinheit (300), die zwischen dem Rücklösebehälter (130) und dem Sammelbehälter (150) angeordnet und ankoppelbar ist;
(iii) Abtrennen von organischen Bestandteilen aus dem phosphatreichen Anteil des Mediums in einer in der Prozesseinheit (100) angeordneten oder separaten Filtrationseinheit (160), in der ein Retentat und ein Permeat gebildet wird, wobei die Filtrationseinheit (160) mit ihrer Retentatseite mit einem Sammelbehälter (150) zur Rückleitung des Retentats aus der Filtrationseinheit (160) in den Sammelbehälter (150)
(iv) Ausfällen von ein oder mehreren Phosphorverbindungen durch Erhöhen des pH-Werts des Permeats in einem Fällungsbehälter (170), in dem ein phosphatreiches Produkt ausgefällt wird; und
(v) Abtrennen der ein oder mehreren Phosphorverbindungen aus dem Medium in einer Trennvorrichtung (180).

13. Verfahren nach Anspruch 12, **dadurch gekennzeichnet, dass** das Abtrennen des phosphatreichen Anteils des Mediums aus dem angesäuerten Medium außerhalb der mobilen Prozesseinheit (100) durchgeführt wird.

14. Verfahren nach einem der Ansprüche 12 bis 13, **dadurch gekennzeichnet, dass** zur Komplexierung von Metallionen im phosphatreichen Anteil des Mediums ein Komplexbildner im Verhältnis Metallionen zu Komplexbildner von 1:1 zugegeben wird.

## Claims

1. Phosphorus recovery installation (400) for recovering phosphorus from a phosphorus-containing medium, in particular from sewage sludge and/or waste water, with a stationary installation (200), which provides the phosphorus-containing medium, and at least one mobile processing unit (100) for the chemical treatment of the phosphorus-containing medium, which is coupled to the stationary installation (200), wherein the mobile processing unit (100) comprises in a transportable housing (102) a redissolving tank (130), a collecting tank (150) and a precipitation tank (170) and a separating device (180),
**characterised in that** along a processing direction of the medium after the redissolving tank (130) follows a collecting tank (150) connected therewith, after the collecting tank (150) a filtration unit (160) connected therewith, after the filtration unit (160) a precipitation tank (170) connected therewith and after the precipitation tank (170) a separating device (180) connected therewith, wherein
(i) the redissolving tank (130) for redissolving phosphate in the supplied phosphorus-containing medium is coupled to a metering device (134) for acid,
(ii) the collecting tank (150) is provided for collecting the medium which has been partially cleaned in a mobile pressure unit (300) coupled externally to the processing unit (100), wherein acidified medium is supplied from the redissolving tank (130) to the mobile pressure unit (300),
(iii) the filtration unit (160) is provided for forming permeate and retentate from the partially cleaned medium, wherein the filtration unit (160) is connected with its retentate side to the collecting tank (150) for returning the retentate from the filtration unit (160) into the collecting tank (150),
(iv) the precipitation tank (170) is provided for precipitating a phosphate-rich product from the permeate and is coupled to a metering device (178) for the addition of chemicals and
(v) the separating device (180) is provided for separating precipitated phosphate-rich solids from phosphate-poor medium.

2. Phosphorus recovery installation according to claim 1, **characterised in that** between the stationary installation (200) and the mobile processing unit (100) a detachable feed line is provided, via which the phosphorus-containing medium can be fed from the stationary installation (200) into the mobile processing unit (100).

3. Phosphorus recovery installation according to claim 1 or 2, **characterised in that** between the stationary installation (200) and the mobile processing unit (100) a detachable feed-back line is provided, via which the medium reduced in the phosphorus content can be fed back from the mobile processing unit (100) into the stationary installation (200).

4. Phosphorus recovery installation according to any one of the preceding claims, **characterised in that** the mobile processing unit (100) comprises a transportable container or a self-driving vehicle or a vehicle trailer.

5. Phosphorus recovery installation according to any one of the preceding claims, **characterised in that** the stationary installation (200) is a sewage treatment plant.

6. Phosphorus recovery installation according to claim 5, **characterised in that** the mobile processing unit (100) is coupled to a collecting tank (202) for sewage sludge and/or waste water of the stationary installation (200).

7. Phosphorus recovery installation according to any one of the preceding claims, **characterised in that** the mobile processing unit (100) is provided for coupling to a plurality of stationary installations (200).

8. Mobile processing unit (100) for a phosphorus recovery installation (400), in particular according to any one of the preceding claims, wherein in a transportable housing (102) a redissolving tank (130), a collecting tank (150), a filtration unit (160), a precipitation tank (170) and a separating device (180) are arranged, **characterised in that** along a processing direction of the medium after the redissolving tank (130) follows a collecting tank (150) connected therewith, after the collecting tank (150) a filtration unit (160) connected therewith, after the filtration unit (160) a precipitation tank (170) connected therewith and after the precipitation tank (170) follows a separating device (180) connected therewith, wherein the redissolving tank (130) for redissolving phosphate in the supplied phosphorus-containing medium is coupled to a metering device (134) for acid; the collecting tank (150) is provided for collecting the medium which has been partially cleaned in a mobile pressure unit (300) coupled externally to the processing unit (100), wherein acidified medium is supplied from the redissolving tank (130) to the mobile pressure unit (300), the filtration unit (160) for forming permeate and retentate is connected with its retentate side to the collecting tank (150) for returning the retentate from the filtration unit (160) into the collecting tank (150), the precipitation tank (170) is provided for precipitating a phosphate-rich product from the permeate, wherein the precipitation tank (170) is coupled to a metering device (178) for the addition of chemicals, and the separating device (180) is provided for separating precipitated phosphate-rich solids from phosphate-poor medium.

9. Processing unit according to claim 8, **characterised in that** in processing direction a comminution unit (126) is arranged upstream of the redissolving tank (130).

10. Processing unit according to any of claims 8 and 9, **characterised in that** at least the collecting tank (150) and/or the precipitation tank (170) have a sample removal point.

11. Method for operating a phosphorus recovery installation (400) for recovering phosphorus from a phosphorus-containing medium, in particular from sewage sludge and/or waste water, **characterised by** the steps of:
(a) providing a phosphorus-containing medium in a stationary installation (200);
(b) coupling a mobile processing unit (100), which is designed according to any of claims 8 to 10, to the stationary installation (200);
(c) introducing the medium into the mobile processing unit (100);
(d) extracting and/or crystallising the phosphate fraction from the medium in the mobile processing unit (100),
wherein in the mobile processing unit (100) in processing direction of the medium the following steps are carried out
(i) acidifying the medium to a desired pH value in a redissolving tank (130) in which phosphate in the supplied phosphorus-containing medium is redissolved,
(ii) separating-off a phosphate-rich fraction of the medium from the acidified medium in a pressure unit (300) which is arranged and can be coupled between the redissolving tank (130) and the collecting tank (150);
(iii) separating-off organic components from the phosphate-rich fraction of the medium in a filtration unit (160), arranged in the processing unit (100) or separate, in which a retentate and a permeate are formed, wherein the filtration unit (160) is connected with its retentate side to a collecting tank (150) for feeding-back the retentate from the filtration unit (160) into the collecting tank (150),
(iv) complexing metal ions in the permeate and subsequently precipitating one or more phosphorus compounds by raising the pH value of the permeate in a precipitation tank (170), in which a phosphate-rich product is precipitated; and
(v) separating-off the one or more phosphorus compounds from the medium in a separating device (180).

12. Method for operating a phosphorus recovery installation (400) for recovering phosphorus from a phosphorus-containing medium, in particular from sewage sludge and/or waste water, **characterised by** the steps of:
(a) providing a phosphorus-containing medium in a stationary installation (200);
(b) coupling a mobile processing unit (100), which is designed according to any of claims 8 to 10, to the stationary installation (200);
(c) introducing the medium into the mobile processing unit (100);
(d) extracting and/or crystallising the phosphate fraction from the medium in the mobile processing unit (100),
wherein in the mobile processing unit (100) in processing direction of the medium the following steps are carried out
(i) acidifying the medium to a desired pH value with simultaneous complexing of metal ions in the phosphate-rich fraction of the medium in a redissolving tank (130), in which phosphate in the supplied phosphorus-containing medium is redissolved;
(ii) separating-off a phosphate-rich fraction of the medium from the acidified medium in a pressure unit (300) which is arranged and can be coupled between the redissolving tank (130) and the collecting tank (150);
(iii) separating-off organic components from the phosphate-rich fraction of the medium in a filtration unit (160), arranged in the processing unit (100) or separate, in which a retentate and a permeate are formed, wherein the filtration unit (160) is connected with its retentate side to a collecting tank (150) for feeding-back the retentate from the filtration unit (160) into the collecting tank (150);
(iv) precipitating one or more phosphorus compounds by raising the pH value of the permeate in a precipitation tank (170), in which a phosphate-rich product is precipitated; and
(v) separating-off the one or more phosphorus compounds from the medium in a separating device (180).

13. Method according to claim 12, **characterised in that** the separating-off of the phosphate-rich fraction of the medium from the acidified medium is carried out externally to the mobile processing unit (100).

14. Method according to any of claims 12 to 13, **characterised in that** for complexing metal ions in the phosphate-rich fraction of the medium a complexing agent is added in the ratio of metal ions to complexing agent of 1:1.

## Revendications

1. Installation de récupération de phosphore (400) pour la récupération de phosphore à partir d'un milieu contenant du phosphore, en particulier à partir de boues d'épuration et/ou d'eaux usées, avec une installation stationnaire (200) qui fournit le milieu contenant du phosphore et au moins une unité de traitement mobile (100) pour le traitement chimique du milieu contenant du phosphore, qui est couplée à l'installation stationnaire (200), dans laquelle l'unité de traitement mobile (100) comprend, dans un boîtier transportable (102), un récipient de redissolution (130), un récipient de collecte (150) et un récipient de précipitation (170) et un dispositif de séparation (180),
**caractérisée en ce que**, dans une direction de traitement du milieu, le récipient de redissolution (130) est suivi d'un récipient de collecte (150) relié à celui-ci, le récipient de collecte (150), d'une unité de filtration (160) reliée à celui-ci, l'unité de filtration (160), d'un récipient de précipitation (170) relié à celle-ci et le récipient de précipitation (170), d'un dispositif de séparation (180) relié à celui-ci, dans laquelle
(i) le récipient de redissolution (130) pour redissoudre du phosphate dans le milieu contenant du phosphore amené est couplé à un système de dosage (134) pour de l'acide,
(ii) le récipient de collecte (150) est prévu pour collecter le milieu partiellement purifié dans une unité de pressage mobile (300) couplée en externe à l'unité de traitement (100), dans laquelle un milieu acidifié du récipient de redissolution (130) est amené à l'unité de pressage mobile (300),
(iii) l'unité de filtration (160) est prévue pour former un perméat et un rétentat à partir du milieu partiellement purifié, dans laquelle l'unité de filtration (160) est reliée par son côté rétentat au récipient de collecte (150) pour le renvoi du rétentat de l'unité de filtration (160) au récipient de collecte (150),
(iv) le récipient de précipitation (170) est prévu pour précipiter un produit riche en phosphate à partir du perméat et est couplé à un système de dosage (178) pour ajouter des produits chimiques, et
(v) le dispositif de séparation (180) est prévu pour séparer une matière solide riche en phosphate précipitée d'un milieu pauvre en phosphate.

2. Installation de récupération de phosphore selon la revendication 1, **caractérisée en ce qu'**une conduite d'alimentation amovible, à l'aide de laquelle le milieu contenant du phosphore peut être introduit depuis l'installation stationnaire (200) dans l'unité de traitement mobile (100), est disposée entre l'installation stationnaire (200) et l'unité de traitement mobile (100).

3. Installation de récupération de phosphore selon la revendication 1 ou 2, **caractérisée en ce qu'**une conduite de réalimentation amovible, à l'aide de laquelle le milieu à teneur réduite en phosphore peut être réalimenté depuis l'unité de traitement mobile (100) dans l'installation stationnaire (200), est disposée entre l'installation stationnaire (200) et l'unité de traitement mobile (100).

4. Installation de récupération de phosphore selon l'une quelconque des revendications précédentes, **caractérisée en ce que** l'unité de traitement mobile (100) comprend un conteneur transportable ou un véhicule automoteur ou une remorque de véhicule.

5. Installation de récupération de phosphore selon l'une quelconque des revendications précédentes, **caractérisée en ce que** l'installation stationnaire (200) est une installation d'épuration.

6. Installation de récupération de phosphore selon la revendication 5, **caractérisée en ce que** l'unité de traitement mobile (100) est couplée à un récipient de collecte (202) pour des boues d'épuration et/ou des eaux usées de l'installation stationnaire (200).

7. Installation de récupération de phosphore selon l'une quelconque des revendications précédentes, **caractérisée en ce que** l'unité de traitement mobile (100) est prévue pour être couplée à une pluralité d'installations stationnaires (200).

8. Unité de traitement mobile (100) pour une installation de récupération de phosphore (400), en particulier selon l'une quelconque des revendications précédentes, dans laquelle un récipient de redissolution (130), un récipient de collecte (150), une unité de filtration (160), un récipient de précipitation (170) et un dispositif de séparation (180) sont disposés dans un boîtier transportable (102), **caractérisée en ce que**, dans une direction de traitement du milieu, le récipient de redissolution (130) est suivi d'un récipient de collecte (150) relié à celui-ci, le récipient de collecte (150), d'une unité de filtration (160) reliée à celui-ci, l'unité de filtration (160), d'un récipient de précipitation (170) relié à celle-ci et le récipient de précipitation (170), d'un dispositif de séparation (180) relié à celui-ci, dans laquelle le récipient de redissolution (130) pour redissoudre du phosphate dans le milieu contenant du phosphore amené est couplé à un système de dosage (134) pour de l'acide ; le récipient de collecte (150) est prévu pour collecter le milieu partiellement purifié dans une unité de pressage mobile (300) couplée en externe à l'unité de traitement (100), dans laquelle un milieu acidifié du récipient de redissolution (130) est amené à l'unité de pressage mobile (300), l'unité de filtration (160) pour former un perméat et un rétentat est reliée par son côté rétentat au récipient de collecte (150) pour le renvoi du rétentat de l'unité de filtration (160) au récipient de collecte (150), le récipient de précipitation (170) est prévu pour précipiter un produit riche en phosphate à partir du perméat, dans laquelle le récipient de précipitation (170) est couplé à un système de dosage (178) pour ajouter des produits chimiques, et le dispositif de séparation (180) est prévu pour séparer une matière solide riche en phosphate précipitée d'un milieu pauvre en phosphate.

9. Unité de traitement selon la revendication 8, **caractérisée en ce qu'**une unité de broyage (126) est montée en amont du récipient de redissolution (130) dans la direction de traitement.

10. Unité de traitement selon l'une quelconque des revendications 8 à 9, **caractérisée en ce qu'**au moins le récipient de collecte (150) et/ou le récipient de précipitation (170) présentent un point de prélèvement d'échantillons.

11. Procédé de fonctionnement d'une installation de récupération de phosphore (400) pour la récupération de phosphore à partir d'un milieu contenant du phosphore, en particulier à partir de boues d'épuration et/ou d'eaux usées, **caractérisé par** les étapes suivantes consistant à :
(a) fournir un milieu contenant du phosphore dans une installation stationnaire (200) ;
(b) coupler une unité de traitement mobile (100), conçue selon l'une quelconque des revendications 8 à 10, à l'installation stationnaire (200) ;
(c) introduire le milieu dans l'unité de traitement mobile (100) ;
(d) extraire et/ou cristalliser la part de phosphate à partir du milieu dans l'unité de traitement mobile (100),
dans lequel sont réalisées, dans l'unité de traitement mobile (100) dans la direction de traitement du milieu, les étapes suivantes consistant à
(i) acidifier le milieu à un pH voulu dans un récipient de redissolution (130) dans lequel du phosphate est redissous dans le milieu contenant du phosphore amené,
(ii) séparer une part riche en phosphate du milieu à partir du milieu acidifié dans une unité de pressage (300) qui est disposée entre le récipient de redissolution (130) et le récipient de collecte (150) et peut y être couplée ;
(iii) séparer des composants organiques à partir de la part riche en phosphate du milieu dans une unité de filtration (160), dans laquelle sont formés un perméat et un rétentat, disposée dans l'unité de traitement (100) ou séparée, dans lequel l'unité de filtration (160) est reliée par son côté rétentat à un récipient de collecte (150) pour le renvoi du rétentat de l'unité de filtration (160) au récipient de collecte (150),
(iv) complexer des ions métalliques dans le perméat et précipiter ensuite un ou plusieurs composés de phosphore, en augmentant le pH du perméat, dans un récipient de précipitation (170), dans lequel un produit riche en phosphate est précipité ; et
(v) séparer les un ou plusieurs composés de phosphore à partir du milieu dans un dispositif de séparation (180).

12. Procédé de fonctionnement d'une installation de récupération de phosphore (400) pour la récupération de phosphore à partir d'un milieu contenant du phosphore, en particulier à partir de boues d'épuration et/ou d'eaux usées, **caractérisé par** les étapes suivantes consistant à :
(a) fournir un milieu contenant du phosphore dans une installation stationnaire (200) ;
(b) coupler une unité de traitement mobile (100), conçue selon l'une quelconque des revendications 8 à 10, à l'installation stationnaire (200) ;
(c) introduire le milieu dans l'unité de traitement mobile (100) ;
(d) extraire et/ou cristalliser la part de phosphate à partir du milieu dans l'unité de traitement mobile (100),
dans lequel sont réalisées, dans l'unité de traitement mobile (100) dans la direction de traitement du milieu, les étapes suivantes consistant à
(i) acidifier le milieu à un pH voulu dans un récipient de redissolution (130), dans lequel du phosphate est redissous dans le milieu contenant du phosphore amené, tout en complexant simultanément des ions métalliques dans la part riche en phosphate du milieu ;
(ii) séparer une part riche en phosphate du milieu à partir du milieu acidifié dans une unité de pressage (300) qui est disposée entre le récipient de redissolution (130) et le récipient de collecte (150) et peut y être couplée ;
(iii) séparer des composants organiques à partir de la part riche en phosphate du milieu dans une unité de filtration (160), dans laquelle sont formés un perméat et un rétentat, disposée dans l'unité de traitement (100) ou séparée, dans lequel l'unité de filtration (160) est reliée par son côté rétentat à un récipient de collecte (150) pour le renvoi du rétentat de l'unité de filtration (160) au récipient de collecte (150) ;
(iv) précipiter un ou plusieurs composés de phosphore, en augmentant le pH du perméat, dans un récipient de précipitation (170), dans lequel un produit riche en phosphate est précipité ; et
(v) séparer les un ou plusieurs composés de phosphore à partir du milieu dans un dispositif de séparation (180).

13. Procédé selon la revendication 12, **caractérisé en ce que** la séparation de la part riche en phosphate du milieu à partir du milieu acidifié est réalisée en dehors de l'unité de traitement mobile (100).

14. Procédé selon l'une quelconque des revendications 12 à 13, **caractérisé en ce qu'**un agent complexant en un rapport ions métalliques sur agent complexant de 1:1 est ajouté pour complexer des ions métalliques dans la part riche en phosphate du milieu.
